# FASCICULE DE BREVET EUROPEEN

(11) **EP 0 811 853 B1**
(45) Date de publication et mention de la délivrance du brevet: **10.04.2002**
(21) Numéro de dépôt: 97401178.5
(22) Date de dépôt: 29.05.1997
(51) Int. Cl.: G01S 7/537, F41G 7/22

(54) **Procédé de conduite et de protection d'un navire**
Verfahren zur Lenkung und zum Schutz eines Schiffes
Method for steering and protecting a ship

(30) Priorité: 07.06.1996 FR 9607052
(43) Date de publication de la demande: 10.12.1997
(73) Titulaire: ETAT FRANCAIS représenté par le DELEGUE GENERAL pour L'ARMEMENT, 75007 Paris (FR)
(72) Inventeur: Le Dard, Michel, 83120 Sainte Maxime (FR)

(56) Documents cités:
- EP-A- 0 240 819
- EP-A- 0 654 401
- DE-C- 3 435 130
- US-A- 3 771 115
- US-A- 5 253 216
- US-A- 5 268 875

## Description

La présente invention concerne un procédé de conduite assurant la protection d'un navire en présence d'un objet représentant une menace et un dispositif correspondant.

Le domaine technique de l'invention est celui des aménagements défensifs des navires, submersibles ou non, notamment contre les sous-marins ou les torpilles.

L'application principale de l'invention est la lutte contre les torpilles, plus particulièrement en leur faisant suivre une trajectoire autre que celle réellement décrite par le navire cible sur lequel elles ont été tirées.

Il est connu de leurrer l'ennemi en lui présentant de fausses cibles qu'il confond avec les vraies et sur lesquelles il concentre son tir, ce qui ne présente pas de risque pour la vraie cible. C'est ainsi que les avions peuvent larguer des artifices qui brûlent en émettant des rayonnements infrarouges, ce qui attire les missiles guidés par de tels rayonnements. Dans le domaine naval, on sait aussi leurrer ou brouiller les torpilles en larguant des bouées qui émettent des signaux acoustiques du type de ceux du navire cible dans le cas du leurrage, très puissants et couvrant les signaux de la cible dans le cas du brouillage. La torpille se dirige vers cette (ces) bouée(s) et lorsqu'elle arrive à proximité de celle-ci, le bâtiment s'est suffisamment éloigné pour diminuer considérablement les risques d'être touché. Le risque n'est toutefois pas nul car on peut très bien, à l'aide d'une logique relativement sommaire, lorsque la torpille a dépassé la bouée, la réorienter en lui faisant décrire un cercle vers une autre source qui pourra être le navire cible.

Des dispositifs spécifiques ont alors été développés. On peut citer les dispositifs de contre-mesures tractés par les navires cible sur lesquels les torpilles ont été tirées, qui ont l'avantage de ne nécessiter aucune implantation de systèmes d'alertes sur les navires remorqueurs. Ils présentent, en outre, l'inconvénient de se comporter comme un "phare", c'est à dire de rendre connue la position du bâtiment pour les ennemis et, d'attirer la menace à proximité du bâtiment.

Afin de pallier les inconvénients de tous ces dispositifs, le demandeur a déposé la demande de brevet FR-A-2 712 560 relative à un procédé de protection d'un navire contre un objet. Ce procédé consiste à larguer depuis le navire un automoteur sous-marin qui effectue à son tour au moins un largage d'au moins un leurre et/ou brouilleur susceptible d'émettre un signal acoustique de leurrage et/ou de brouillage. L'avantage prinicipal qui découle de ce procédé est que la menace est attirée vers un but fictif et à une distance telle qu'elle ne peut détecter le navire cible. Bien que ce procédé ait une efficacité de protection très satisfaisante, il présente néanmoins un inconvénient. En effet, une fois le premier largage effectué, c'est-à-dire lorsque le dispositif automoteur sous-marin a quitté le navire, les caps respectifs du navire et du dispositif précité sont définis et ne prennent pas en compte d'éventuelles contraintes extérieures qui peuvent venir perturber le déroulement dudit procédé.

On peut enfin citer le brevet DE3435130 qui décrit un procédé de protection d'un navire en présence d'un objet sous-marin représentant une menace et muni d'un sonar, ce procédé comportant au préalable à un instant ti) une étape de mise en oeuvre de moyens de détection de la présence de l'objet et d'évaluation de sa position relative par rapport au navire puis une étape de déploiement de contre-mesures consistant à parasiter acoustiquement, dans la zone d'approche de l'objet, un champ de brouillage par un réseau d'ondes de pression interférentielles au moyen de bulles gazeuses de haute énergie répartie de façon particulière. Un tel procédé ne permet pas de réaliser une protection efficace contre les torpilles dites intelligents où contre l'attaque de plusieurs torpilles provenant de directions différentes, ni de prendre en compte à tout moment d'éventuelles contraintes extérieures qui peuvent venir perturber le déroulement dudit procédé.

La présente invention a pour objectif de proposer une autre approche problème/solution relative à un procédé de protection d'un navire contre un objet muni d'un sonar.

Conformément à l'invention, cet objectif est atteint du fait que le procédé consiste à guider l'objet selon une certaine trajectoire qui lui donne un but fictif à atteindre, à une distance telle qu'il ne peut détecter le navire, tout en proposant au navire une autre trajectoire adaptée.

La présente invention vise un procédé de conduite et de protection d'un navire en présence d'un objet sous-marin, représentant une menace, muni d'un sonar, consistant à mettre en oeuvre :
- des moyens de détection, préalablement à un instant ti), de la présence de l'objet sous-marin et des moyens d'évaluation de sa position relative par rapport au navire ;
- des moyens de détermination en un temps réel (δt) de la situation opérationnelle globale à partir des caractéristiques intrinsèques du navire définies par son accélération, sa vitesse maximale, sa vitesse de giration dans le plan horizontal, de la connaissance de la topographie sous-marine dans un rayon donné autour du navire, de la connaissance d'appontages, luttes antiaériennes et luttes sous-marine ;
- des moyens de détermination pendant ce même temps réel (δt) les paramètres caractérisant l'objet que sont sa position et sa vitesse, son cap et son immersion ;
- des moyens de déploiement depuis le navire de n contre-mesures ;
ledit procédé de conduite et de protection du navire étant *caractérisé en ce* qu'il consiste également à mettre en oeuvre,
- des moyens de définition, à un instant (t0=ti+δt) d'une trajectoire d'évasive que doit suivre le navire, à partir des évaluations précédentes ;
- des moyens d'adaptation, à tout instant t) de l'intervalle [t0,tf] de la trajectoire d'évasive en fonction de la situation opérationnelle globale et des positions relatives du navire et de l'objet sous-marin, tf) étant l'instant où le navire est hors de portée de l'objet sous-marin ;
- des moyens permettant de calculer à tout instant t de l'intervalle [t0,tf], les instants de déploiement et les coordonnées des contre-mesures à déployer, ces calculs étant réalisés selon les mesures effectuées à l'instant (t-δt), et en fonction des trajectoires réellement suivies par le navire et l'objet sous-marin, ainsi qu'en fonction de la situation opérationnelle de l'ensemble.

Avantageusement, ce procédé de conduite et de protection d'un navire en présence d'un objet sous-marin représentant une menace est telle que les contre-mesures émettent un bruit acoustique d'au moins 30 dB au dessus des bruits maximum des navires les plus bruyants connus, émise dans toute la gamme de fréquence de fonctionnement des sonars d'objets connus lorsque le sonar est passif, et très supérieur à 30dB à la fréquence de fonctionnement révélée lorsque le sonar est actif.

La présente invention vise non seulement le procédé de protection d'un navire mentionné ci-dessus mais également un dispositif de conduite et de protection d'un navire, en présence d'un objet, représentant une menace, dispositif du type comprenant une unité centrale de calcul, qui commande et contrôle des moyens de déploiement de contre-mesures, reliée aux moyens de détection de l'objet et aux moyens de navigation du navire, ce dispositif étant apte à mettre en oeuvre le procédé de protection d'un navire mentionné ci-dessus.

Les dispositions suivantes sont de préférences adoptées:
- les moyens de déploiement des contre-mesures comprennent des moyens de lancement depuis le navire, des moyens de commande en vol et des moyens de stabilisation à l'immersion souhaitée des contre-mesures,
- les moyens de lancement comprennent des moyens de pointage,
- les moyens de commande en vol comprennent des moyens de propulsion, un séquenceur de vol et des moyens de freinage,
- au moins deux moyens de déploiement des contre-mesures sont disposés de part et d'autre de l'axe longitudinal du navire.

Ces caractéristiques et avantages de l'invention, ainsi que d'autres, apparaîtront à la lecture de la description des modes de réalisation donnés ci-après à titre d'exemples.

Toute référence sera faite par rapport aux dessins annexés dans lesquels:
- la figure 1 est une vue schématique illustrant un mode préférentiel d'un dispositif de protection conforme à l'invention tel qu'il est mis en oeuvre sur un navire;
- la figure 2 est une vue en coupe d'une roquette comprenant une contre-mesure telle qu'elle est lancée depuis le navire conformément à l'invention;
- la figure 3 est un schéma synoptique d'une contre-mesure utilisée conformément à l'invention;
- la figure 4 représente les différentes phases de déploiement d'une contre-mesure à un instant (tn) donné;
- la figure 5 est une vue générale illustrant un navire ayant mis en oeuvre le procédé de protection contre un objet conformément à l'invention.

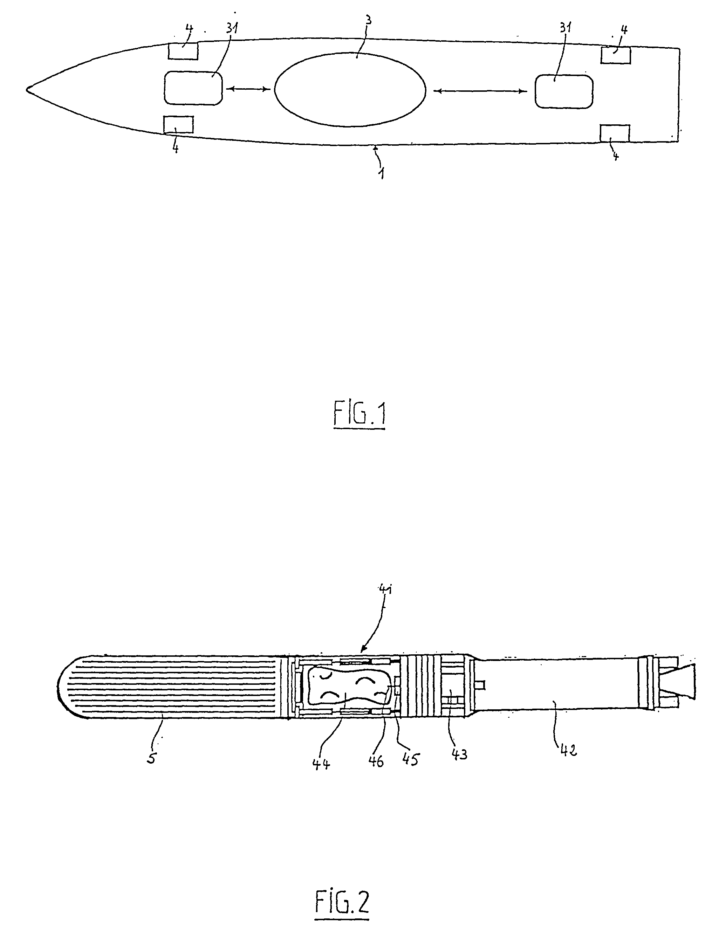

On se réfère tout d'abord à la figure 1.

Le navire 1 comporte une unité centrale 3 connectée à un boîtier de contrôle 31 lui-même relié à deux des moyens de déploiement de contre-mesures 4 disposés de part et d'autre de l'axe longitudinal du navire.

Lorsque l'unité centrale 3 indique que des contre-mesures doivent être déployées, le boîtier de contrôle 31 sélectionne les moyens de déploiement des contre-mesures 4 situés sur le bord du navire 1 à partir duquel il est préférable de déployer des contre-mesures.

Sur la figure 2 est représentée une roquette 41 qui, tirée depuis une rampe de lancement, non représentée, située sur le pont du navire 1, constitue un exemple de réalisation des moyens de déploiement des contre-mesures 4.

La roquette 41 comprend des moyens de propulsion 42 du type moteur à poudre, une tranche électronique 43 intégrant un séquenceur en vol, un moyen de maintien à la surface 44 du type bouée, un moyen de détection d'entrée à l'eau 45, un câble 46 et une contre-mesure 5.

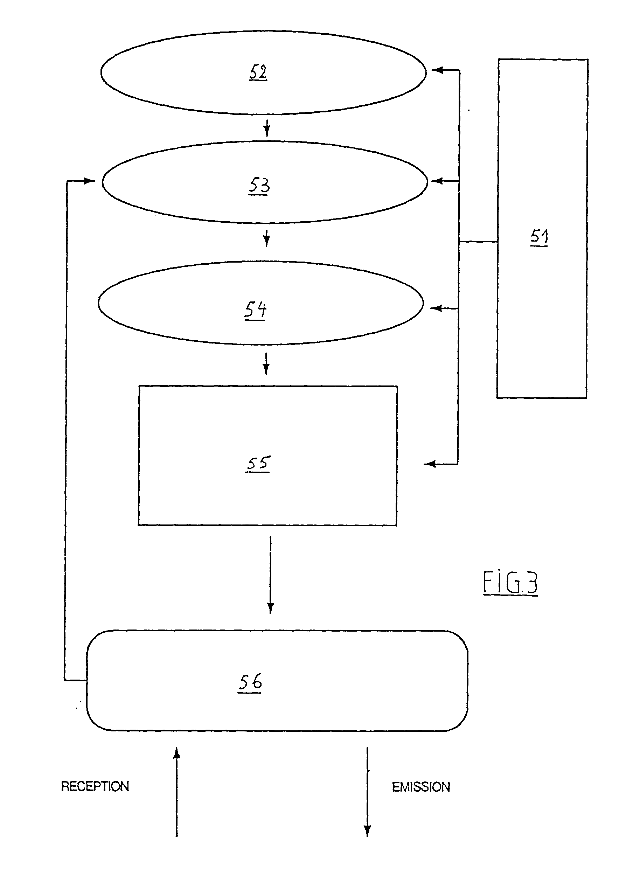

Les éléments d'une contre-mesure 5 utilisée selon l'invention sont représentés sur la figure 3. Une tranche d'alimentation électrique 51 fournit l'énergie électrique nécessaire à un dispositif de sécurité/mise en fonctionnement 52, à une tranche électronique de leurrage/brouillage 53, à une tranche électronique de puissance 54 et à un transformateur de puissance électrique 55; des transducteurs électroacoustiques 56 assurent l'émission et/ou la réception de signaux acoustiques.

Lors de la mise en fonctionnement de la contre-mesure 5, déclenchée par radioguidage par l'intermédiaire du dispositif 52 en interface avec l'unité centrale 3, la tranche électronique de leurrage/brouillage 53 délivre un signal électrique aux transducteurs électroacoustiques 56, le signal électrique étant au préalable amplifié par la tranche électronique de puissance 54 et le transformateur de puissance 55.

Le principe de fonctionnement du leurrage/brouillage de la contre-mesure 5, telle qu'elle est mise en oeuvre selon l'invention, est de perturber en permanence le sonar de l'objet 2, qu'il soit du type passif et/ou actif.

Lorsque le sonar de l'objet 2 est passif, il n'émet aucun signal acoustique et ne fait que détecter les signaux acoustiques provenant du navire 1. Le brouillage réalisé par la contre-mesure 5 consiste à générer par l'intermédiaire des transducteurs électroacoustiques 56 un bruit acoustique dans une gamme de fréquence correspondant aux bandes de fréquences des sonars d'objets 2 connus, par exemple comprises entre 15 et 80 kHz dans le cas de sonars de torpille.

Le bruit acoustique émis est d'au moins 30 dB au dessus des bruits maximums des navires 1 les plus bruyants connus, et ce sur toute la bande de fréquence.

Lorsque le sonar de l'objet 2 est actif, il émet des signaux acoustiques, et capte par réflexion ceux provenant du navire 1. Le brouillage/leurrage actif réalisé par la contre-mesure 5 après écoute permanente du sonar de l'objet 2 consiste, aux fréquences de fonctionnement du sonar révélées, d'une part à émettre un bruit acoustique de brouillage, très supérieur à 30 dB, équivalent à celui du brouillage réalisé lorsque le sonar de l'objet 2 est passif et, simultanément, à émettre un écho de leurrage qui reproduit la signature acoustique d'une fausse cible.

Préférentiellement, le brouillage/leurrage actif réalisé par la contre-mesure 5 peut être effectué séparément, simultanément ou séquentiellement au brouillage réalisé lorsque le sonar de l'objet 2 est passif.

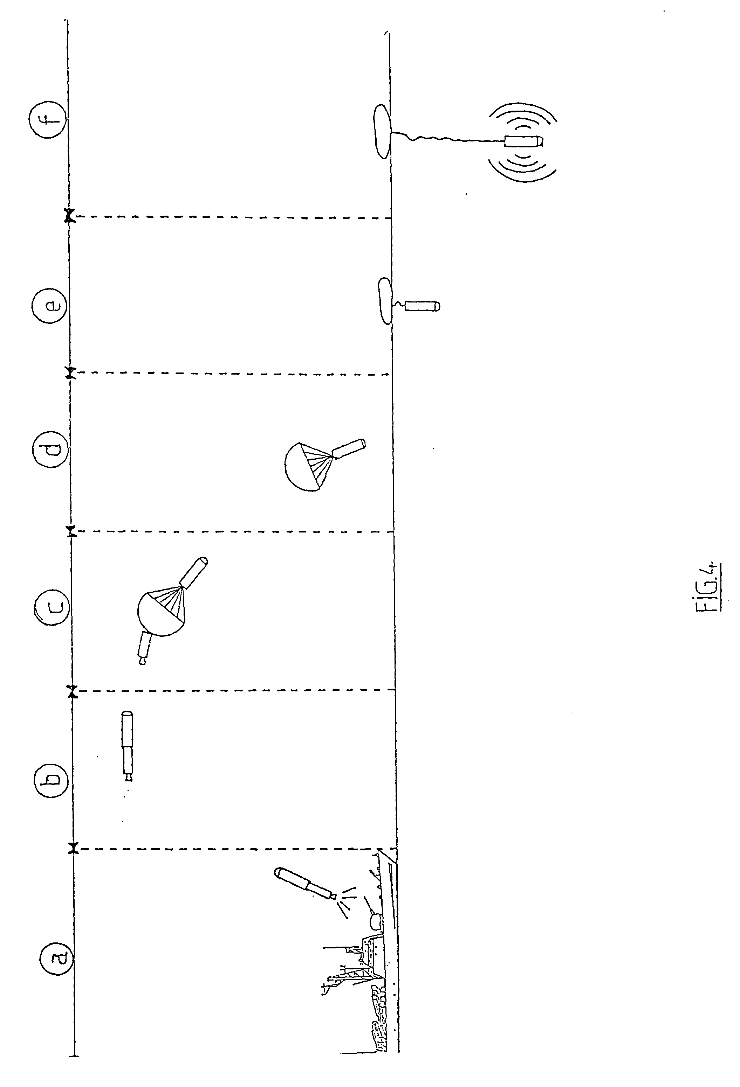

Sur la figure 4, sont montrées les différentes phases de déploiement d'une contre-mesure 5 à un instant tn donné. Lors de la phase a, la roquette 41 est propulsée depuis le navire 1 et effectue un vol commandé par préprogrammation de la tranche électronique 43 en interface avec l'unité centrale 3 (phase b). Après séparation des moyens de propulsion 42 et extraction d'un parachute (phase c), le corps de la roquette 41 est freiné pendant sa descente (phase d). Dès que le corps de la roquette 41 entre en contact avec l'eau, le moyen de détection d'entrée à l'eau 45 est actionné et libère la bouée 44 (phase e). Dans une dernière phase (phase f) et avant mise en fonctionnement de la contre-mesure 5, le déroulement du câble 46, commandé par la tranche électronique 43 en interface avec l'unité centrale 3, est effectué, ce qui permet de maintenir la contre-mesure 5 à l'immersion souhaitée.

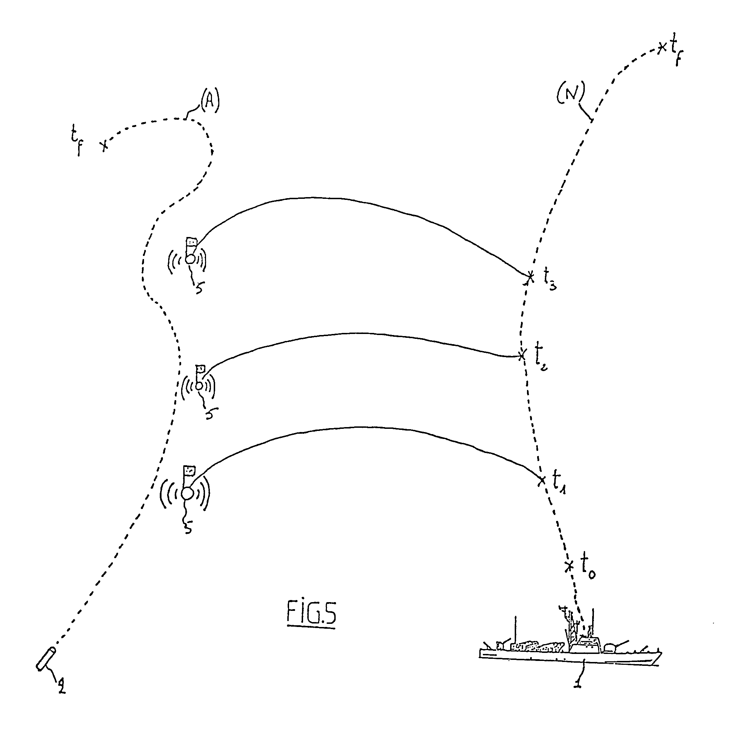

On se réfère maintenant plus particulièrement à la figure 5 des dessins, afin de pouvoir décrire un procédé préférentiel de protection du navire 1 contre l'objet 2 .

Sur cette figure, sont schématisées, en pointillés, les trajectoires (N) et (A) suivies respectivement par le navire 1 et l'objet 2 au cours du procédé.

Dès que le navire 1 a détecté la présence de l'objet 2, les paramètres position (et éventuellement vitesse, cap, immersion) caractérisant l'objet sont déterminés.

A l'instant t0, le navire 1 doit alors suivre une trajectoire d'évasive précise. Cette trajectoire d'évasive est adaptée en permanence jusqu'à l'instant tf, instant où le navire 1 est hors de portée de l'objet 2, de telle sorte que le navire 1 suit finalement une trajectoire (N) durant laquelle n contre-mesures 5 sont lancées depuis le navire 1.

A un instant tn donné, le lancement de la nième contre-mesure 5, effectué entre une distance de quelques dizaines de mètres et une distance de quelques dizaines de kilomètres depuis le navire 1 à protéger, est tel qu'il est réalisé avec une précision et un délai compatibles avec les caractéristiques intrinsèques du navire 1 (accélération, vitesse maximale, vitesse de giration le plan horizontal, vitesse de plongée), la topographie sous-marine environnante et les autres actions des éléments du navire 1.

Ainsi, les n contré-mesures 5 déployées aux instants t1, t2, t3 ....tn qui brouillent et/ou leurrent le sonar de l'objet 2, déterminent -sa trajectoire (A) jusqu'à ce que le navire 1 est hors de portée de l'objet 2 à l'instant tf.

## Revendications

1. Procédé de conduite et de protection d'un navire (1) en présence d'un objet sous-marin (2) représentant une menace, muni d'un sonar, consistant à mettre en oeuvre :
- des moyens de détection, préalablement à un instant ti), de la présence de l'objet sous-marin (2) et des moyens d'évaluation de sa position relative par rapport au navire,
- des moyens de détermination en un temps réel (δt) de la situation opérationnelle globale à partir des caractéristiques intrinsèques du navire définies par son accélération, sa vitesse maximale, sa vitesse de giration dans le plan horizontal, de la topographie sous-marine dans un rayon donné autour du navire, de la connaissance d'appontages, luttes antiaériennes et luttes sous-marine,
- des moyens de détermination pendant ce même temps réel (δt) des paramètres caractérisant l'objet que sont sa position et son cap, sa vitesse et son immersion,
- des moyens de déploiement depuis le navire de n contre-mesures (5),
ledit procédé de conduite et de protection du navire (1) étant ***caractérisé en ce qu***'il consiste également à mettre en oeuvre,
- des moyens de définition, à un instant (t0=ti+δt), d'une trajectoire d'évasive que doit suivre le navire à partir des évaluations précédentes,
- des moyens d'adaptation, à tout instant t) de l'intervalle [t0,tf] de la trajectoire d'évasive en fonction de la situation opérationnelle globale et des positions relatives du navire (1) et de l'objet sous-marin (2), tf) étant l'instant où le navire (1) est hors de portée de l'objet sous-marin (2),
- des moyens permettant de calculer à tout instant t de l'intervalle [t0,tf], les instants de déploiement et les coordonnées des contre-mesures (5) à déployer, ces calculs étant réalisés selon les mesures effectuées à l'instant (t-δt), et en fonction des trajectoires réellement suivies par le navire (1) et l'objet sous-marin (2), ainsi qu'en fonction de la situation opérationnelle de l'ensemble.

2. Procédé (2) selon revendication 1, **caractérisé en ce que** les contre-mesures (5) émettent un bruit acoustique d'au moins 30 dB au-dessus des bruits maximums des navires les plus bruyants connus, émise dans toute la gamme de fréquence de fonctionnement des sonars d'objet connus lorsque le sonar est passif, et très supérieur à 30 dB à la fréquence de fonctionnement révélée lorsque le sonar est actif.

3. Dispositif mettant en oeuvre le procédé de la revendication 1, du type comportant une unité centrale de calcul (3) reliée aux moyens de détection de l'objet, qui commande et contrôle des moyens de déploiement de contre-mesures (4), **caractérisé en ce que** l'unité centrale de calcul (3) est reliée aux moyens de navigation du navire.

4. Dispositif selon la revendication 3, **caractérisé en ce que** les moyens de déploiement des contre-mesures (4) comportent des moyens de lancement depuis le navire, des moyens de commande en vol et des moyens de stabilisation des contre-mesures à l'immersion souhaitée.

5. Dispositif selon l'une quelconque des revendications 3 et 4, **caractérisé en ce que** les moyens de lancement comprennent en outre un moyen de pointage.

6. Dispositif selon l'une quelconque des revendications 3 à 5, **caractérisé en ce que** les moyens de commande en vol comprennent, en outre, un moyen de propulsion (42), un séquenceur de vol et un moyen de freinage

7. Dispositif selon l'une quelconque des revendications 3 à 6, **caractérisé en ce que** les moyens de stabilisation des contre-mesures à l'immersion souhaitée comprennent un moyen de détection d'entrée à l'eau (45) et un moyen de maintien à la surface (44).

8. Dispositif selon l'une quelconque des revendications 3 à 7, **caractérisé en ce qu'**au moins deux moyens de déploiement des contre-mesures sont disposés de part et d'autre de l'axe longitudinal du navire.

## Claims

1. Procedure for steering and protecting a vessel (1) in the presence of an underwater object (2) representing a threat, equipped with a sonar, consisting in employing:
- means for detecting, prior to a time Li), the presence of the underwater object (2) and means for evaluating its relative position with respect to the vessel,
- means for determining in real time (*t) the overall operational situation from the intrinsic characteristics of the vessel defined by its acceleration, its maximum speed, its turning speed in the horizontal plane, underwater topography in a given radius around the vessel, knowledge of landings, anti-aircraft and anti-submarine actions.
- means for determining during this same real time (*t) parameters characterising the object which are its position and course, its speed and depth of submersion,
- means for deploying from the vessel n countermeasures (5).
the said procedure for steering and protecting the vessel (1) being ***characterised in that*** it also consists in employing,
- means for defining, at a time (t0=ti+*t), an evasive course to be followed by the vessel away from the previous evaluations,
- means for adapting, at any time t) of the interval [t0,tf], the evasive course as a function of the overall operational situation and the relative positions of the vessel (1) and the underwater object (2), tf) being the time at which the vessel (1) is out of range of the underwater object (2),
- means making it possible to calculate, at any time t of the interval [t0,tf], the times of deployment and the coordinates of the countermeasures (5) to be deployed, these calculations being performed according to the measurements carried out at the time (t-*t), and as a function of the courses actually followed by the vessel (1) and the underwater object (2), and also as a function of the overall operational situation.

2. Procedure according to Claim 1, **characterised in that** the countermeasures (5) emit an acoustic noise at least 30 dB above the maximum noise of the noisiest vessels known, emitted in the entire frequency and operating range of the known object sonars when the sonar is passive, and much higher than 30 dB at the detected operating frequency when the sonar is active.

3. Device employing the procedure of Claim 1, of the type including a central processing unit (3) linked to the object detection means, which controls countermeasure deployment means (4), **characterised in that** the central processing unit (3) is linked to the vessel navigation means.

4. Device according to Claim 3, **characterised in that** the countermeasure deployment means (4) include means for launching, from the vessel, in-flight control means and means for stabilising the countermeasures at the desired depth of submersion.

5. Device according to either one of Claims 3 and 4, **characterised in that** the launching means additionally comprise an aiming means.

6. Device according to any one of claims 3 to 5, **characterised in that** the in-flight control means additionally comprise a propulsion means (42), an in-flight sequencer and a braking means.

7. Device according to any one of claims 3 to 6, **characterised in that** the means for stabilising the countermeasures at the desired depth of submersion comprise a water entry detection means (45) and a buoyancy means (44).

8. Device according to any one of Claims 3 to 7, **characterised in that** at least two countermeasure deployment means are arranged on both sides of the longitudinal axis of the vessel.

## Patentansprüche

1. Verfahren zum Führen und Schützen eines Schiffes (1) in Gegenwart eines eine Gefahr darstellenden und mit einem Sonar versehenen unterseeischen Objekts (2), wobei das Verfahren besteht im Einsatz von:
- Mitteln, die vor einem Zeitpunkt ti) das Vorhandensein des unterseeischen Objekts (2) erfassen, und von Mitteln, die dessen relative Position in bezug auf das Schiff bewerten,
- Mitteln, die in einer Fehtzeit (δt) die globale operative Situation anhand intrinsischer Eigenschaften des Schiffes bestimmen, die durch seine Beschleunigung, seine Höchstgeschwindigkeit, seine Giergeschwindigkeit in der horizontalen Ebene, die Unterseetopographie innerhalb eines gegehenen Radius um das Schiff, die Kenntnis von Landungen auf dem Deck, von Luftabwehrkämpfen und von unterseeischen Kämpfen definiert sind,
- Mitteln die während dieser Echtzeit (δt) Parameter bestimmen, die das Objekt hinsichtlich seiner Position und seines Kurses, seiner Geschwindigkeit und seiner Eintauchtiefe kennzeichnen,
- Mitteln, die vom Schiff aus n Gegenmaßnahmen (5) entwickeln,
wobei das Verfahren zum Führen und Schützen eines Schiffes (1) **dadurch gekennzeichnet ist, daß** es außerdem besteht im Einsatz von
- Mitteln, die zu einem Zeitpunkt (t0 = ti + δt) eine Ausweichbahn, der das Schiff folgen soll, anhand vorhergehender Bewertungen definieren,
- Mitteln, die zu jedem Zeitpunkt t) des Intervalls [t0, tf] die Ausweichbahn in Abhängigkeit von der globalen operativen Situation und der relativen Positionen des Schiffes (1) und des unterseeischen Objekts (2) anpassen, wobei tf) der Zeitpunkt ist, zu dem sich das Schiff (1) außerhalb der Reichweite des unterseeischen Objekts (2) befindet.
- Mitteln, die zu jedem Zeitpunkt t des Intervalls [t0, tf] die Berechnung der Zeitpunkte der Entwicklung und die Koordinaten der zu entwickelnden Gegenmaßnahmen (5) ermöglichen, wobei diese Berechnungen anhand der zum Zeitpunkt (t - δt) ausgeführten Maßnahmen und in Abhängigkeit von den Bahnen, die vom Schiff(1) und vom unterseeischen Objekt (2) tatgächlich verfolgt werden, sowie in Abhängigkeit von der operativen Situation der Gesauntheit ausgeführt werden.

2. Verfahren (2) nach Anspruch 1, **dadurch gekennzeichnet, daß** die Gegenmaßnahmen (5) ein akustisches Geräusch aussenden, das wenigstens 30 dB über den maximalen Geräuschen der lautesten bekannten Schiffe liegt und im gesamten Betriebsfrequenzbereich bekannter Objekt-Sonare ausgesendet wird, wenn das Sonar passiv ist, und das, wenn das Sonar aktiv ist, bei der erkannten Betriebsfrequenz weit über 30 dB liegt.

3. Vorrichtung, die das Verfahren nach Anspruch 1 ausführt und von dem Typ ist, der eine Zentraleinheit (3) enthält, die mit Objekterfassungsmitteln verbunden ist und die Mittel (4) für die Entwicklung von Gegenmaßnahmen steuert und kontrolliert, **dadurch gekennzeichnet, daß** die Zentraleinheit (3) mit den Navigationsmitteln des Schiffes verbunden ist.

4. Vorrichtung nach Anspruch 3, **dadurch gekennzeichnet. daß** die Mittel (4) für die Entwicklung von Gegenmaßnahmen Mittel für den Abschuß vom Schiff aus, Mittel für die Flugsteuerung und Mittel für die Stabilisierung von Gegemnaßnahmen bei der gewünschten Eintauchtiefe umfassen.

5. Vorrichtung nach einem der Ansprüche 3 und 4, **dadurch gekennzeichnet, daß** die Ahschußmittel außerdem ein Zielmittel umfassen.

6. Vorrichtung nach einem der Ansprüche 3 bis 5, **dadurch gekennzeichnet, daß** die Flugsteuerungsmittel außerdem ein Vortriebsmittel (42), eine Flug-Ablaufsteuerungseinrichtung und ein Bremsmittel umfassen.

7. Vorrichtung nach einem der Ansprüche 3 bis 6, **dadurch gekennzeichnet, daß** die Mittel für die Stabilisierung der Gegenmaßnahmen auf der gewünschten Eintauchtiefe ein Mittel (45) für die Erfassung des Wassereintritts und ein Mittel (44) zum Halten auf der Oberfläche umfassen.

8. Vorrichtung nach einem der Ansprüche 3 bis 7, **dadurch gekennzeichnet daß** wenigstens zwei Mittel für die Entwicklung von Gegenmaßnahmen beiderseits der Längsachse des Schiffes angeordnet sind.
